## Europäisches Patentamt

## European Patent Office

## Office européen des brevets

(19)

(11) Veröffentlichungsnummer : **0 384 014 B1**

(12) # EUROPÄISCHE PATENTSCHRIFT

(45) Veröffentlichungstag der Patentschrift :
**30.12.92 Patentblatt 92/53**

(21) Anmeldenummer : **89121789.5**

(22) Anmeldetag : **25.11.89**

(51) Int. Cl.$^5$ : **G01P 1/02**

(54) **Einrichtung zur Lagefixierung eines Spulenträgers in einem topfförmig ausgebildeten Gehäuseteil.**

(30) Priorität : **26.01.89 DE 3902218**

(43) Veröffentlichungstag der Anmeldung :
**29.08.90 Patentblatt 90/35**

(45) Bekanntmachung des Hinweises auf die
Patenterteilung :
**30.12.92 Patentblatt 92/53**

(84) Benannte Vertragsstaaten :
**DE ES FR GB IT SE**

(56) Entgegenhaltungen :
**EP-A- 0 194 213
EP-A- 0 276 600
DE-A- 3 530 288
DE-A- 3 628 585**

(73) Patentinhaber : **WABCO Westinghouse
Fahrzeugbremsen GmbH
Am Lindener Hafen 21 Postfach 91 12 80
W-3000 Hannover 91 (DE)**

(72) Erfinder : **Singbartl, Günther
Körtingstrasse 3
W-3000 Hannover 1 (DE)**

(74) Vertreter : **Schrödter, Manfred
WABCO Westinghouse Fahrzeugbremsen
GmbH Am Lindener Hafen 21 Postfach 91 12
80
W-3000 Hannover 91 (DE)**

**Beschreibung**

Die Erfindung betrifft eine Einrichtung zur Lagefixierung eines Spulenträgers in einem topfförmig ausgebildeten Gehäuseteil, insbesondere für den Spulenträger eines Impulsdrehzahlgebers, gemäß dem Oberbegriff des Patentanspruchs 1.

Eine Einrichtung diese Art ist durch die DE-OS 35 30 288 bekannt. Dort sind bei einem Impulsdrehzahlgeber der Spulenträger und das Verschlußteil als eine einstückige Baueinheit ausgebildet. Diese Baueinheit wird nach dem Einsetzen in das topfförmige Gehäuseteil mit diesem mechanisch verbunden. Diese bekannte Einrichtung weist den Nachteil auf, daß bedingt durch Maßtoleranzen am Spulenträger und am topfförmigen Gehäuseteil der Fall eintreten kann, daß u.a. zwischen Spulenträger und Gehäuseboden ein Spalt entsteht und somit die Spule nicht die für die Funktion günstigste Lage, insbesondere zum Gehäuseboden hin, einnimmt.

Der Erfindung liegt die Aufgabe zugrunde, eine Einrichtung der eingangs erwähnten Art zu schaffen, die es ermöglicht, das Verschlußteil und den Spulenträger vorzumontieren und lagegenau im Gehäuse und insbesondere zum Gehäuseboden hin, unabhängig von Toleranzen, fixieren zu können.

Diese Aufgabe wird mit der im Patentanspruch 1 angegebenen Erfindung gelöst. Weiterbildungen und vorteilhafte Ausgestaltungen der Erfindung sind in den abhängigen Ansprüchen angegeben.

Die Erfindung bietet insbesondere den Vorteil, durch die kraft- oder auch formschlüssige Verbindung zwischen Verschlußteil und Spulenträger eine genaue Lagefixierung des Spulenträgers im Sinne eines Einstellvorganges zum Gehäuseboden hin zu bewirken. Das Verschlußteil beaufschlagt den Spulenträger mit einer Vorspannung in Richtung auf den Boden des topfförmigen Gehäuseteiles zu. In vorteilhafter Weise ist die formschlüssige Verbindung zwischen dem Verschlußteil und dem Spulenträger nach Art einer Verzahnung ausgebildet.

Die Verzahnung ist gemäß einer Weiterbildung des Erfindungsgegenstandes so ausgebildet, daß nach dem Einsetzen der aus Spulenträger und Verschlußteil bestehenden Baueinheit in das topfförmige Gehäuseteil die zungenartigen Anformungen des Verschlußteiles oder an diesen angeordnete Vorsprünge nach außen, in Richtung auf die Innenwand des Gehäuses zu belastet werden und so an der Innenwand des Gehäuses anliegen. Durch diese Maßnahme wird zusätzlich eine Lagefixierung des Spulenträgers quer zur Längsachse des Gehäuses erreicht.

Vorteilhafterweise ist das Verschlußteil als Kabeldurchführung für ein die im Gehäuse angeordneten elektrischen Bauteile mit außerhalb des Gehäuses gelegenen Bauteilen verbindendes Kabel ausgebildet.

Gemäß einer vorteilhaften Weiterbildung der Erfindung ist zwischen dem Verschlußteil und dem mit dem Polstift in Verbindung stehenden Permanentmagneten ein Federelement vorgesehen, welches den Polstift mit dem Boden des Gehäuses in Anlage hält.

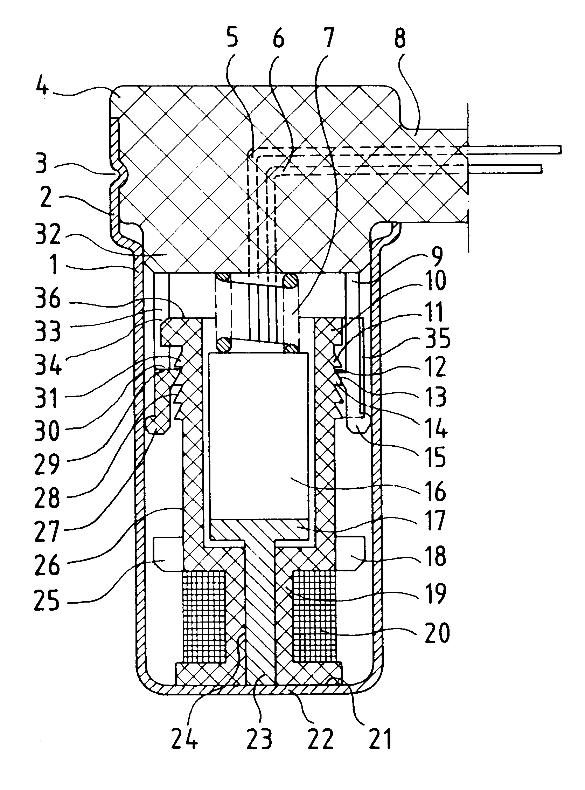

Anhand der Zeichnung wird nachstehend ein Ausführungsbeispiel der Erfindung näher erläutert.

Die Abbildung zeigt einen Impulsdrehzahlgeber mit einem Spulenträger und einem als Kabeldurchführung ausgebildeten Verschlußteil, wobei der Spulenträger und die Kabeldurchführung mittels einer Rastverbindung miteinander verbunden sind.

Der in der Abbildung dargestellte Impulsdrehzahlgeber weist ein Gehäuse auf, welches sich aus einem topfförmigen Gehäuseteil (1, 2, 22) und einem als Kabeldurchführung (4, 8) dienenden Verschlußteil für das topfförmige Gehäuseteil (1, 2, 22) zusammensetzt. Das topfförmige Gehäuseteil (1, 2, 22) besitzt einen Boden (22) und weist auf seiner dem Boden (22) abgewandten Seite einen erweiterten Bereich (2) auf, der zur Aufnahme der Kabeldurchführung (4, 8) dient.

Im topfförmigen Gehäuseteil (1, 2, 22) ist ein rohrförmiger abgestufter Spulenträger (10, 19, 21) angeordnet. Der Spulenträger (10, 19, 21) ist an seinem dem Boden (22) des topfförmigen Gehäuseteiles (1, 2, 22) zugewandten Ende mit einem sich radial nach außen erstreckenden umlaufenden Vorsprung (21) versehen. Zwischen der Abstufung und dem umlaufenden Vorsprung (21) ist auf dem den geringeren Querschnitt aufweisenden Teil (19) des Spulenträgers (10, 19, 21) eine diesen Teil (19) des Spulenträgers (10, 19, 21) umgebende Spulenwicklung (20) angeordnet.

In dem rohrförmigen Spulenträger (10, 19, 21) sind ein abgestufter Polstift (17, 23) und ein Permanentmagnet (16) derart angeordnet, daß der Polstift (17, 23) mit seiner den geringeren Querschnitt aufweisenden Stirnseite am Boden (22) des topfförmigen Gehäuseteiles (1, 2, 22) anliegt. Der Permanentmagnet (16) ist auf der dem Boden (22) des topfförmigen Gehäuseteiles (1, 2, 22) abgewandten Seite des Polstiftes (17, 23) gelegen und mit diesem in engem Kontakt.

Auf dem Umfang des Spulenträgers (10, 19, 21) sind im gleichen Abstand zueinander zwei Anformungen (18 und 25) vorgesehen, die quer zur Längsachse des Spulenträgers (10, 19, 21) verlaufen und so bemessen sind, daß sie einen nur minimalen Abstand zur Innenwand des Gehäuseteiles (1, 22) haben. Die Anformungen (18, 25) können die Funktion von Abstandshaltern zwischen Spulenträger (10, 19, 21) und Gehäusewand haben.

In den erweiterten Bereich (2) des topfförmigen Gehäuseteiles (1, 2, 22) ist ein als Kabeldurchführung (4, 8) für das topfförmige Gehäuseteil (1, 2, 22) dienendes Verschlußteil eingesetzt. Die Kabeldurchführung (4, 8) weist auf ihrer dem Spulenträger (10, 19, 21) zugewandten Seite einen Fortsatz (32) auf.

Am Fortsatz (32) der Kabeldurchführung (4, 8) sind einander gegenüberliegend zwei zungenartige Anformungen (9 und 33) vorgesehen, die sich in Richtung auf den Spulenträger (10, 19, 21) zu erstrecken und im wesentlichen parallel zur Längsachse des Spulenträgers (10, 19, 21) verlaufen. Die zungenartigen Anformungen (9 und 33) der Kabeldurchführung (4, 8) sind so angeordnet, daß sie zwischen der Innenwand des topfförmigen Gehäuseteiles (1, 2, 22) und dem Spulenträger (10, 19, 21) gelegen sind.

Jede der beiden zungenartigen Anformungen (9 bzw. 33) weist mindestens einen nasenartigen Vorsprung (13 bzw. 29) auf, der in Richtung auf die Mantelfläche des Spulenträgers (10, 19, 21) zu gerichtet ist.

Auf seiner Mantelfläche weist der Spulenträger (10, 19, 21) im Bereich der zungenartigen Vorsprünge (9, 33) nach Art einer Verzahnung ausgebildete Erhöhungen (11, 14 bzw. 28, 31) und Vertiefungen (12 bzw. 30) auf.

Die nasenartigen Vorsprünge (13 bzw. 29) der zungenartigen Anformungen (9, 33) der Kabeldurchführung (4, 8) stehen mit der Verzahnung (11, 14, 12 bzw. 28, 31, 30) des Spulenträgers (10, 19, 21) in Eingriff. Die Zähne der Verzahnung (11, 14, 12) bzw. (28, 31, 30) sind so ausgebildet, daß jeweils eine Zahnflanke eines Zahnes schräg nach unten, in Richtung auf den Boden (22) des Gehäuseteiles (1, 22) zu verläuft und die demselben Zahn zugeordnete jeweils andere Zahnflanke im wesentlichen senkrecht (quer) zur Längsachse des Spulenträgers (10, 19, 21) verläuft.

An den freien Enden der zungenartigen Anformungen (9 bzw. 33) der Kabeldurchführung (4, 8) sind sich radial nach außen erstreckend Vorsprünge (15 bzw. 27) angeordnet, die unter Vorspannung an der Innenseite des topfförmig ausgebildeten Gehäuseteiles (1, 2, 22) anliegen. Die Vorsprünge an den zungenartigen Anformungen (9 bzw. 33) brauchen nicht an den freien Enden der Anformungen (9 bzw. 33) angeordnet zu sein. Sie können auch an anderen Stellen außerhalb des Bereiches der nasenartigen Vorsprünge (13 bzw. 29) versehen werden.

Jeder der nasenartigen Vorsprünge (13 bzw. 29) und jeder Vorsprung (11, 14, 28, 31) der Verzahnung des Spulenträgers (10, 19, 21) weist eine Anlaufschräge auf, die den zungenartigen Anformungen (9 bzw. 33) mit ihren nasenartigen Vorsprüngen (13, 29) das Überfahren der Verzahnung (11, 14, 28, 31) des Spulenträgers (10, 19, 21) beim Zusammenfügen von Kabeldurchführung (4, 8) und Spulenträger (10, 19, 21) erleichtern.

Ebenso können die zungenartigen Anformungen (9 bzw. 33) der Kabeldurchführung (4, 6) anstelle von nasenartigen Vorsprüngen eine Verzahnung aufweisen.

Im Umkehrschluß kann der Spulenträger (10, 19, 21) anstatt mit Verzahnungen (11, 14 bzw. 28, 31) mit nasenartigen Vorsprüngen versehen werden.

Zur Führung der zungenartigen Vorsprünge sind in Richtung der Längsachse des Spulenträgers (10, 19, 21) verlaufend am Spulenträger (10, 19, 21) im Bereich der Verzahnungen (14, 11 bzw. 28, 31) zu beiden Seiten der zungenartigen Anformungen (9 bzw. 33) schienenartige Vorsprünge (35) angeformt. Die Anformungen (35) sind so ausgebildet, daß sie zusammen mit der Verzahnung (11, 14 bzw. 28, 31) ein zur Innenwand des topfförmigen Gehäuseteiles (1, 2, 22) hin offenes U-Profil bilden, wobei der Nutgrund dieses U-Profils die Verzahnung (11, 14 bzw. 28, 31) ist.

Eine andere Art der Führung ist auf der linken Seite der Zeichnung dargestellt.

Die zungenartige Anformung (33) weist eine Ausnehmung (34) auf, in welche sich ein Vorsprung (36) hineinerstreckt, welcher auf der der Kabeldurchführung (4, 8) zugewandten Seite des Spulenträgers (10, 19, 21) am Spulenträger angeformt ist und sich radial nach außen in Richtung auf die zungenartige Anformung (33) zu erstreckt. Die Ausnehmung (34) in der zungenartigen Anformung (33) ist in Richtung ihrer Längsachse so bemessen, daß in axialer Richtung zwischen dem Spulenträger (10, 19, 21) und der Kabeldurchführung (4, 8) noch Spiel verbleibt, bevor der Vorsprung (29) der zungenartigen Anformung (33) in die Verzahnung (28, 31) des Spulenträgers (10, 19, 21) eingreift.

Selbstverständlich werden immer zwei gleichartige Führungen für die zungenartigen Anformungen (9 bzw. 33) gewählt werden.

Die als ein in der zungenartigen Anformung (33) vorgesehener Schlitz ausgebildete Führung hat den Vorteil, daß der Spulenträger (10, 19, 21) und die Kabeldurchführung (4, 8) auch dann noch miteinander verbunden sind, wenn die nasenartigen Vorsprünge (29 bzw. 13) der zungenartigen Vorsprünge (33 bzw. 9) der Kabeldurchführung (4, 8) nicht mit der Verzahnung (28, 31 bzw. 14, 11) des Spulenträgers (10, 19, 21) in Eingriff stehen.

Zwischen den einander zugewandten Seiten des Spulenträgers (10, 19, 21) und des Fortsatzes (32) der Kabeldurchführung (4, 8) ist ein als Feder (7) ausgebildetes elastisches Element angeordnet. Die Feder (7) stützt sich mit ihrem einen Ende am Fortsatz (32) ab und belastet mit ihrem anderen Ende den im Spulenträger (10, 19, 21) angeordneten Permanentmagneten (16). Da der Permanentmagnet (16) am Polstift (17, 23) anliegt, wird dieser mit seiner dem Boden (22) des topfförmigen Gehäuseteiles (1, 2, 22) zugewandten Stirnseite mit diesem in Anlage gehalten.

Die Kabeldurchführung (4, 8) weist einen Durchlaß für zwei Kabel (5, 6) bzw. für die Adern eines Kabels auf, mittels welcher die Spule (20) mit einem außerhalb des Gehäuses (1, 2, 22, 4, 8) des Impulsdrehzahlgebers gelegenen elektrischen Bauteil verbindbar ist.

Die zungenartigen Anformungen (9 bzw. 33) können selbstverständlich auch am Spulenträger (10, 19, 21) angeordnet sein, derart, daß sie sich in Richtung auf die Kabeldurchführung (4, 8) zu erstrecken. Bei einer solchen Ausführungsform müßte der Fortsatz (32) der Kabeldurchführung (4, 8) in Richtung auf den Spulenträger (10, 19, 22) zu verlängert werden und einen Querschnitt aufweisen, der es erlaubt, die zungenartigen Anformungen (9 bzw. 33) außen am Fortsatz (32) vorbeizuführen.

Es ist auch möglich, den Spulenträger (10, 19, 21) oder die Kabeldurchführung (4, 8) mit in Richtung ihrer Längsachse angeordneten Ausnehmungen zu versehen, in welche die an dem jeweils anderen Teil, Kabeldurchführungen (4, 8) oder Spulenträger (10, 19, 21), angeformten Zungen (9 bzw. 33) eintauchen. Die diese Ausnehmungen begrenzenden Wandungen müssen dann quer zur Längsachse der Ausnehmungen verlaufende Erhöhungen und Vertiefungen oder Durchbrechungen aufweisen, in welche die an den Zungen angeordneten Vorsprünge eingreifen. Die zungenartigen Anformungen müssen nicht zwangsläufig an der Kabeldurchführung (4, 8) oder am Spulenträger (10, 19, 21) angeformt sein, sondern können auch mit Befestigungsmitteln an diesen befestigt sein.

Anstelle von zungenartigen Anformungen kann auch ein in Richtung seiner Längsachse geschlitzt ausgebildeter rohrförmiger Körper vorgesehen werden, in den ein am jeweils anderen Teil, Spulenträger oder Kabeldurchführung, vorgesehener Körper oder ein Teil des Spulenträgers bzw. ein Teil der Kabeldurchführung eintaucht. Der rohrförmige Körper muß dann selbstverständlich mit einem der beiden Teile, Kabeldurchführung oder Spulenträger, verbunden sein.

Das elastische Element zwischen Kabeldurchführung und Permanentmagnet kann sich selbstverständlich auch an einem mit dem Permanentmagneten verbundenen Teil, wie z.B. einer Rückschlußplatte, abstützen.

Die zur Schnapp- und Rastverbindung dienenden Erhöhungen und Vertiefungen können an Anformungen des Spulenträgers (10, 19, 21) und der Kabeldurchführung (4, 8) oder auch direkt an diesen genannten Bauteilen vorgesehen werden.

Die Montage des vorstehend beschriebenen Impulsdrehzahlgebers wird nachfolgend näher erläutert.

Vor dem Einbringen des Spulenträgers (10, 19, 21) in das topfförmige Gehäuseteil (1, 2, 22) werden die Kabel (5, 6) in die Ausnehmung der Kabeldurchführung (4, 8) eingeschoben bzw. umpreßt. Der Polstift (17, 23) und der Permanentmagnet (16) werden nacheinander in den abgestuft ausgebildeten Innenraum (26, 24) des rohrförmigen Spulenträgers 10, 19, 21) eingesetzt. Anschließend wird die Feder (7) in den freien Raum zwischen den zungenartigen Anformungen (9, 33) des Fortsatzes (32) der Kabeldurchführung (4, 8) eingesetzt, derart, daß sie mit ihrem einen Ende am Fortsatz (32) zur Anlage kommt. Die Kabeldurchführung (4, 8) wird dann mit ihren zungenartigen Anformungen (9 bzw. 33) auf den die Verzahnung (11, 14 bzw. 28, 31) aufweisenden Teil des Spulenträgers (10, 19, 21) aufgeschoben, uns zwar so weit, bis die nasenartigen Vorsprünge (13 bzw. 29) der zungenartigen Anformungen (9 bzw. 33) der Kabeldurchführung (4, 8) in die Zahnlücken (12 bzw. 30) der Verzahnung des Spulenträgers (10, 19, 21) einschnappen.

Erleichtert wird der Vorgang des Zusammenfügens von Kabeldurchführung (4, 8) und Spulenträger (10, 19, 21) dadurch, daß an den die Verzahnung bildenden Erhöhungen (11, 14 bzw. 28, 31) des Spulenträgers (10, 19, 21) Anlaufschrägen vorgesehen sind, mittels welchen die zungenartigen Anformungen (9 bzw. 33) der Kabeldurchführung (4, 8) beim Zusammensteckvorgang von Kabeldurchführung (4, 8) und Spulenträger (10, 19, 21) nach außen gespreizt (elastisch verformt) werden.

Die Kabeldurchführung (4, 8) und der Spulenträger (10, 19, 21) werden jetzt von der zwischen diesen beiden Bauteilen angeordneten Feder (7), die einerseits am Fortsatz (32) der Kabeldurchführung (4, 8) und andererseits am Permanentmagneten (16) anliegt, in der Weise belastet, daß sie bestrebt sind, sich voneinander wegzubewegen.

Durch die von der Verzahnung (11, 14 bzw. 28, 31) des Spulenträgers (10, 19, 21) und den mit den Vorsprüngen (13 bzw. 29) der zungenartigen Anformungen (9 bzw. 33) der Kabeldurchführung (4, 8) gebildete Rastverbindung sowie durch die Feder (7) werden der Spulenträger (10, 19, 27) und die Kabeldurchführung (4, 8) unter Vorspannung zusammengehalten und bilden so eine Baueinheit.

Die Vorsprünge (13, 29) an den zungenartigen Anformungen (9, 33) weisen auf ihrer dem Fortsatz (32) zugewandten Seite eine parallel zu dieser Seite des Fortsatzes (32) verlaufende ebene Fläche auf. Die Verzahnung (11, 14, 28, 31) weist auf ihrer der ebenen Fläche der Vorsprünge (13, 29) zugewandten Seite ebenfalls eine parallel zu dieser Seite des Fortsatzes (32) verlaufende ebene Fläche auf. Durch diese Maßnahme wird erreicht, daß bei einer Bewegung zwischen Spulenträger (10, 19, 21) und Kabeldurchführung (4, 8) voneinander weg eine Sperrwirkung eintritt.

Die Adern der Kabel (5, 6) und die Drähte der Spule (20) werden jetzt verlötet.

Die so vormontierte Baueinheit (Kabeldurchführung 4, 8 und Spulenträger 10, 19, 21) wird in das topfförmige Gehäuseteil (1, 2, 22) eingesetzt, wobei der Polstift (17, 23) mit seiner dem Boden (22) des topfförmigen Gehäuseteiles (1, 2, 22) zugewandten Stirnfläche am Boden (22) zur Anlage kommt.

Die Kabeldurchführung (4, 8) wird jetzt so weit in das topfförmige Gehäuseteil (1, 2, 22) eingeschoben, bis sie mit ihrem deckelartigen Teil (4) auf dem Rand des topfförmigen Gehäuseteiles (1, 2, 22) aufliegt.

Bei diesem Vorgang wird die Kabeldurchführung (4, 8) weiter auf den Spulenträger (10, 19, 21) aufgeschoben, wobei die dem Boden (22) des Gehäuses (1, 2, 22) zugewandte Stirnseite (21) des Spulenträgers (10, 19, 21) am Boden (22) des Gehäuses (1, 2, 22) zur Anlage kommt. Die an den zungenartigen Anformungen (9 bzw. 33) vorgesehenen Vorsprünge (13 bzw. 29) befinden sich mit den nach Art einer Verzahnung ausgebildeten Erhöhungen und Vertiefungen (11, 14 bzw. 28, 31) des Spulenträgers (10, 19, 21) weiter in Eingriff und bilden so eine Rastverbindung zwischen Spulenträger (10, 19, 21) und Kabeldurchführung (4, 8).

Da die Vorsprünge (13, 29) der Kabeldurchführung (4, 8) nicht immer genau in den entsprechenden Vertiefungen (12, 30) der Verzahnung (11, 14, 28, 31) des Spulenträgers (10, 19, 21) zu liegen kommen, werden die zungenartigen Anformungen (9 bzw. 33) quer zur Längsachse des Spulenträgers (10, 19, 21) nach außen gedrückt und liegen mit ihren an ihrer Außenseite angeordneten Vorsprüngen (15 bzw. 27) unter Vorspannung an der Innenwand des topfförmigen Gehäuseteiles (1, 2, 22) an.

Mit den vorstehend beschriebenen Mitteln wird erreicht, daß der Spulenträger (10, 19, 21) sowohl in Richtung seiner Längsachse als auch quer zu seiner Längsachse im topfförmigen Gehäuseteil (1, 2, 22) fixiert ist.

Das topfförmige Gehäuseteil (1, 2, 22) und die Kabeldurchführung (4, 8) werden mit geeigneten Mitteln miteinander verbunden. Dies kann beispielsweise durch Eindrücken (Sicke 3) bestimmter Stellen der Wand des topfförmigen Gehäuseteiles (1, 2, 22) in entsprechende Ausnehmungen in der äußeren Mantelfläche der Kabeldurchführung (4, 8) geschehen.

Wird die zungenartige Anformung (33) mit einer in Richtung ihrer Längsachse verlaufenden Durchbrechung (34) versehen, wie auf der linken Seite der Abbildung dargestellt, so schnappt beim Zusammenstecken von Spulenträger (10, 19, 21) und Kabeldurchführung (4, 8) der Vorsprung (36) des Spulenträgers (10, 19, 21) in die Durchbrechung (34) ein. Die Durchbrechung (34) weist eine größere axiale Erstreckung auf als der Vorsprung (36) des Spulenträgers (10, 19, 21). Die Durchbrechung (34) in der zungenartigen Anformung (33) und auch gegebenenfalls in der zungenartigen Anformung (9) der Kabeldurchführung (4, 8) bildet zusammen mit dem Vorsprung (36) am Spulenträger (10, 19, 21) eine axial verschiebbare Verbindung zwischen dem Spulenträger (10, 19, 21) und der Kabeldurchführung (4, 8). Diese Verbindung ist so ausgebildet, daß sie bereits wirksam ist, wenn die Verzahnung (11, 14, 28, 31) des Spulenträgers (10, 19, 21) und die Vorsprünge (13 bzw. 29) der zungenartigen Anformungen (9, 33) der Kabeldurchführung noch nicht miteinander in Eingriff stehen. Die Durchbrechung (34) in der zungenartigen Anformung (33) und der Vorsprung (36) am Spulenträger (10, 19, 21) sind so bemessen, daß sie als Verdrehsicherung für den Spulenträger (10, 19, 21) dienen.

Die Einrichtung zur Lagefixierung des Spulenträgers ist selbstverständlich nicht an das beschriebene Ausführungsbeispiel gebunden.

Anstelle einer Zylinderfeder können andere Arten von Federn, wie z.B. eine Kegelfeder oder eine Tonnenfeder, Verwendung finden. Es können auch federnd ausgebildete Vorsprünge an der Kabeldurchführung angeordnet werden, die sich am Permanentmagneten oder am Kern abstützen.

Die zungenartigen Anformungen können sowohl an der Kabeldurchführung als auch am Spulenträger angeordnet sein. Entsprechend können die nasenartigen Vorsprünge sowohl am Spulenträger als auch an der Kabeldurchführung vorgesehen werden.

In gleicher Weise kann die Verzahnung (11, 14 bzw. 28, 31) anstatt am Spulenträger (10, 19, 21) an den zungenartigen Anformungen (9 bzw. 33) angebracht werden.

Anstelle der zungenartigen Anformungen an der Kabeldurchführung kann ein rohrförmiges Teil mit Erhöhungen und Vertiefungen bzw. mit Durchbrechungen oder Vorsprüngen an der Kabeldurchführung vorgesehen werden, in welches das jeweils andere Teil, wie ein Teil des Spulenträgers, eingeschoben wird.

Das rohrförmige Teil müßte mit einem Längsschlitz versehen werden, um beim Vorgang des Zusammenfügens von Spulenträger und Kabeldurchführung ein elastisches Verformen des rohrförmigen Teiles zu ermöglichen (Aufweiten).

Die als Schnapp- und Rastverbindung dienenden Mittel (zungenartige Anformungen an der Kabeldurchführung; Anformungen mit Vorsprüngen am Spulenträger) können aus beliebigen Werkstoffen, wie z.B. Kunststoff oder Metall, bestehen.

Die als Verzahnung ausgebildete formschlüssige Verbindung zwischen dem Spulenträger und dem Verschlußteil kann durch eine nach Art einer reibschlüssigen Verbindung ausgebildete kraftschlüssige Verbindung ersetzt werden.

Zu diesem Zweck wird das jeweils eine Bauteil, Spulenträger oder Verschlußteil, mit einer in Richtung seiner Längsachse verlaufenden Ausnehmung oder einem rohrförmigen Körper oder mit Klemmelementen versehen. Das jeweils andere Bauteil, Verschlußteil oder Spulenträger, oder ein an diesem Bauteil angeordnetes Teil ist so ausgebildet und so bemessen, daß es teilweise oder ganz von der Ausnehmung oder dem rohrförmigen Körper oder den Klemmelementen umschlossen wird, so daß eine Relativbewegung zwischen den beiden Bauteilen nur bei Überwindung der Reibkraft zwischen diesen Teilen möglich ist.

Die Aussage, daß der Spulenträger vom Verschlußteil mit Vorspannung in Richtung auf den Boden des topfförmigen Gehäuseteiles zu beaufschlagt wird, bedeutet, daß der Spulenträger in Anlage mit dem Boden des topfförmigen Gehäuseteiles gehalten wird, wobei der Wert der Vorspannung annähernd Null sein kann.

**Patentansprüche**

1. Einrichtung zur Lagefixierung eines Spulenträgers (10, 19, 21) in einem topfförmig ausgebildeten Gehäuseteil (1, 22, 2), insbesondere für den Spulenträger (10, 19, 21) eines Impulsdrehzahlgebers, welches ein Verschlußteil (4, 8) aufweist, das auf der dem Boden (22) des topfförmigen Gehäuseteiles (1, 2, 22) abgewandten Seite des Spulenträgers (10, 19, 21) im bzw. am topfförmigen Gehäuseteil (1, 2, 22) angeordnet ist, dadurch gekennzeichnet, daß am Verschlußteil (4, 8) oder/und am Spulenträger (10, 19, 21) Mittel zur kraft- oder/und formschlüssigen Verbindung des Verschlußteiles (4, 8) mit dem Spulenträger (10, 19, 21) vorgesehen sind, wobei die Mittel so ausgebildet sind, daß das Verschlußteil (4, 8) den Spulenträger (10, 19, 21) in Richtung auf den Boden (22) des topfförmigen Gehäuseteiles (1, 2, 22) zu mit einer Vorspannung beaufschlagt.

2. Einrichtung nach Anspruch 1, dadurch gekennzeichnet, daß die Mittel von wenigstens einer Erhöhung (13 bzw. 29) und/oder Vertiefung am Verschlußteil (4, 8) oder einem mit dem Verschlußteil (4, 8) verbundenen Teil und von wenigstens einer am Spulenträger (10, 19, 21) oder an einem mit dem Spulenträger (10, 19, 21) verbundenen Teil vorgesehenen Vertiefung (12 bzw. 30) oder/und Erhöhung (11, 14 bzw. 28, 31) gebildet werden, die nach Art einer Schnapp- oder/und Rastverbindung zusammenwirkt.

3. Einrichtung nach Anspruch 1, gekennzeichnet durch die folgenden Merkmale:
a) Die Verschlußteil (4, 8) weist auf seiner dem Spulenträger (10, 19, 21) zugewandten Seite sich auf den Spulenträger (10, 19, 21) zu erstreckende, im wesentlichen parallel zur Längsachse des topfförmigen Gehäuseteiles (1, 2, 22) verlaufende, zungenartige Anformungen (9 bzw. 33) auf;
b) jede der Anformungen (9 bzw. 33) weist wenigstens einen quer zur Längsachse der Anformungen verlaufenden, sich in Richtung auf den Spulenträger (10, 19, 21) zu erstreckenden Vorsprung (13 bzw. 29) auf,
c) am Spulenträger (10, 19, 21) sind im wesentlichen quer zur Längsachse des Spulenträgers (10, 19, 21) verlaufende Erhöhungen (11, 14, 28, 31) und/oder Vertiefungen (12, 30) vorgesehen, welche mit den Vorsprüngen (13, 29) der zungenartigen Anformungen (9, 33) des Verschlußteils (4, 8) nach Art einer Rastverbindung zusammenwirken.

4. Einrichtung nach Anspruch 1, gekennzeichnet durch die folgenden Merkmale:
a) Der Spulenträger (10, 19, 21) weist auf seiner dem Verschlußteil (4, 8) zugewandten Seite sich auf das Verschlußteil (4, 8) zu erstreckende, im wesentlichen parallel zur Längsachse des topfförmigen Gehäuseteiles (1, 2, 22) verlaufende, zungenartige Anformungen auf;
b) jede der Anformungen weist einen im wesentlichen quer zur Längsachse der Anformungen verlaufenden, sich in Richtung auf ein Teil des Verschlußteils (4, 8) zu erstreckenden Vorsprung auf;
c) an dem Verschlußteil (4, 8) sind im wesentlichen quer zur Längsachse des Verschlußteiles (4, 8) verlaufende Erhöhungen und Vertiefungen vorgesehen, welche mit den Vorsprüngen an den zungenartigen Anformungen des Spulenträgers (10, 19, 21) nach Art einer Rastverbindung zusammenwirken.

5. Einrichtung nach wenigstens einem der vorhergehenden Ansprüche 3 oder 4, dadurch gekennzeichnet, daß die Erhöhungen und Vertiefungen von schienenartigen Teilen (35) begrenzt werden, die parallel zu den zungenartigen Vorsprüngen (9 bzw. 33) verlaufen und als Führung für diese dienen.

6. Einrichtung nach Anspruch 5, dadurch gekennzeichnet, daß die schienenartigen Teile (35) am Spulenträger (10, 19, 21) im Bereich der Erhöhungen (11, 14 bzw. 28, 31) und Vertiefungen (12 bzw. 30) angeordnet sind.

7. Einrichtung nach wenigstens einem der vorhergehenden Ansprüche 3 oder 4, dadurch gekennzeichnet, daß jede der zungenartigen Anformungen (9 bzw. 33) eine Durchbrechung (34) aufweist, in welche ein am Spulenträger (10, 19, 21) vorgesehener Vorsprung (36) eingreift.

8. Einrichtung nach wenigstens einem der vorhergehenden Ansprüche 3 oder 4, dadurch gekennzeichnet, daß jede der zungenartigen Anformungen (9 bzw. 33) auf ihrer der Innenwand des topfförmigen Gehäuseteiles (1, 2, 22) zugewandten Seite einen Vorsprung (15 bzw. 27) aufweist, welcher unter Vorspannung an der Innenwand des topfförmigen Gehäuseteiles (1, 2, 22) anliegt.

9. Einrichtung nach wenigstens einem der vorhergehenden Ansprüche, dadurch gekennzeichnet, daß ein elastisches Element (7) vorgesehen ist, welches sich an dem Verschlußteil (4, 8) abstützt und einen im Spulenträger (10, 19, 21) angeordneten Permanentmagneten (16) sowie einen mit diesem in Verbindung stehenden Polstift (17, 23) in Richtung auf den Boden (22) des topfförmigen Gehäuseteiles (1, 2, 22) zu beaufschlagt.

10. Einrichtung nach Anspruch 9, dadurch gekennzeichnet, daß das elastische Element von einer Feder gebildet wird.

11. Einrichtung nach wenigstens einem der vorhergehenden Ansprüche, dadurch gekennzeichnet, daß die Mittel zur kraftschlüssigen Verbindung von Verschlußteil (4, 8) und Spulenträger (10, 19, 21) von einer an dem jeweils einen Bauteil, Spulenträger (10, 19, 21) oder Verschlußteil (4, 8) vorgesehenen Ausnehmung und einem an dem jeweils anderen Bauteil, Verschlußteil (4, 8) oder Spulenträger (10, 19, 21) vorgesehenen Vorsprung gebildet werden, welche nach Art einer reibschlüssigen Steckverbindung zusammenwirken.

12. Einrichtung nach wenigstens einem der vorhergehenden Ansprüche, dadurch gekennzeichnet, daß die Mittel zur kraftschlüssigen Verbindung von Verschlußteil (4, 8) und Spulenträger (10, 19, 21) von einem an dem jeweils einen dieser beiden Bauteile angeordneten rohrförmigen Körper und einem an dem jeweils anderen dieser beiden Bauteile angeordneten Vorsprung gebildet werden, welche nach Art einer reibschlüssigen Steckverbindung zusammenwirken.

13. Einrichtung nach wenigstens einem der vorhergehenden Ansprüche, dadurch gekennzeichnet, daß die Mittel zur kraftschlüssigen Verbindung von Verschlußteil (4, 8) und Spulenträger (10, 19, 21) von an dem jeweils einen Bauteil, Verschlußteil (4, 8) oder Spulenträger (10, 19, 21), angeordneten Klemmelementen gebildet werden, die an dem jeweils anderen Bauteil, Spulenträger (10, 19, 21) oder Verschlußteil (4, 8), angreifen.

14. Einrichtung nach wenigstens einem der vorhergehenden Ansprüche, dadurch gekennzeichnet, daß das Verschlußteil (4, 8) als Kabeldurchführung für ein ein im Gehäuse (1, 2, 22) angeordnetes elektrisches Bauteil (20) mit einem außerhalb des Gehäuses (1, 2, 22) gelegenen elektrischen Bauteil verbindendes Kabel (5, 6) ausgebildet ist.

## Claims

1. A device for fixing the position of a coil carrier (10, 19, 21) in a can-like housing part (1, 2, 22), in particular for the coil carrier (10, 19, 21) of a pulse rate generator, which housing part has a closure member (4, 8) which, at the end of the coil carrier (10, 19, 21) remote from the base (22) of the can-like housing part (1, 2, 22), is arranged in or on the can-like housing part (1, 2, 22), characterized in that means for the non-positive or/and positive connection of the closure member (4, 8) and the coil carrier (10, 19, 21) are provided on the closure member (4, 8) or/and on the coil carrier (10, 19, 21), the means being formed so that the closure member (4, 8) biases the coil carrier (10, 19, 21) towards the base (22) of the can-like housing part (1, 2, 22).

2. A device according to claim 1, characterized in that the means are formed by at least one raised part (13 and 29) and/or indentation on the closure member (4, 8) or by a part connected to the closure member (4, 8) and by at least one indentation (12 and 30 respectively) and/or raised part (11, 14, and 28, 31 respectively) provided on the coil carrier (10, 19, 21) or on a part connected to the coil carrier (10, 19, 21), which means co-operate in the manner of a snap-in or/and locking connection.

3. A device according to claim 1, characterized by the following features:
   a) on its side facing the coil carrier (10, 19, 21) the closure member (4, 8) has tongue-like mouldings (9 and 33 respectively) extending towards the coil carrier (10, 19, 21) and running substantially parallel to the longitudinal axis of the can-like housing part (1, 2, 22);
   b) each of the mouldings (9 and 33) has at least one projection (13 and 29 respectively) running transversely to the longitudinal axis of the mouldings and extending towards the coil carrier (10, 19, 21),
   c) on the coil carrier (10, 19, 21) there are provided raised parts (11, 14, 28, 31) and/or indentations (12, 30) running substantially transversely to the longitudinal axis of the coil carrier (10, 19, 21), which raised parts co-operate in the manner of a locking connection with the projections (13, 29) of the tongue-like mouldings (9, 33) of the closure member (4, 8).

4. A device according to claim 1, characterized by the following features:
   a) on its side facing the closure member (4, 8), the coil carrier (10, 19, 21) has tongue-like mouldings extending towards the closure member (4, 8) and running substantially parallel to the longitudinal axis of the can-like housing part (1, 2, 22);

b) each of the mouldings has a projection running substantially transversely to the longitudinal axis of the mouldings and extending towards a part of the closure member (4, 8);

c) on the closure member (4, 8) there are provided raised parts and recesses running substantially transversely to the longitudinal axis of the closure member (4, 8), which co-operate with the projections on the tongue-like mouldings of the coil carrier (10, 19, 21) in the manner of a locking connection.

5. A device according to at least one of the preceding claims 3 or 4, characterized in that the raised parts and indentations are bounded by rail-like members (35) which run parallel to the tongue-like projections (9 and 33 respectively) and act as guides for these.

6. A device according to claim 5, characterized in that the rail-like members (35) are arranged on the coil carrier (10, 19, 21) in the region of the raised parts (11, 14, and 28, 31 respectively) and indentations (12 and 30 respectively).

7. A device according to at least one of the preceding claims 3 or 4, characterized in that each of the tongue-like mouldings (9 and 33) has a recess (34) which is engaged by a projection (36) provided on the coil carrier (10, 19, 21).

8. A device according to at least one of the preceding claims 3 or 4, characterized in that, on its side facing the inner wall of the can-like housing part (1, 2, 22), each of the tongue-like mouldings (9 and 33) has a projection (15 and 27 respectively) which lies under tension against the inner wall of the can-like housing (1, 2, 22).

9. A device according to at least one of the preceding claims, characterized in that a resilient element (7) is provided, which bears on the closure member (4, 8) and biasses a permanent magnet (16) arranged in the coil carrier (10, 19, 21) and a pole-pin (17, 23) that is connected with the permanent magnet towards the base (22) of the can-like housing part (1, 2, 22).

10. A device according to claim 9, characterized in that the resilient element is formed by a spring.

11. A device according to at least one of the preceding claims, characterized in that the means for the non-positive connection of closure member (4, 8) and coil carrier (10, 19, 21) are formed by a recess provided on the one component, coil carrier (10, 19, 21) or closure member (4, 8), and a projection provided on the respective other component, closure member (4, 8) or coil carrier (10, 19, 21), which means co-operate in the manner of a frictional plug-type connection.

12. A device according to at least one of the preceding claims, characterized in that the means for the non-positive connection of the closure member (4, 8) and coil carrier (10, 19, 21) are formed by a tubular member arranged on one of these two components, and by a projection arranged on the respective other one of these two components, which means co-operate in the manner of a frictional plug-type connection.

13. A device according to at least one of the preceding claims, characterized in that the means for the non-positive connection of the closure member (4, 8) and coil carrier (10, 19, 21) are formed by clamping elements arranged on the one component, closure member (4, 8) or coil carrier (10, 19, 21), which means act on the respective other component, coil carrier (10, 19, 21) or closure member (4, 8).

14. A device according to at least one of the preceding claims, characterized in that the closure member (4, 8) is in the form of a cable feed-through for a cable (5, 6) connecting an electrical component (20) arranged in the housing (1, 2, 22) with an electrical component positioned outside the housing (1, 2, 22).

**Revendications**

1. Dispositif de fixation en position d'un porte-bobine (10, 19, 21) dans une partie enceinte aménagée en forme de pot (1, 22, 2), notamment pour le porte-bobine (10, 19, 21) d'un capteur de vitesse de rotation générateur d'impulsions, ladite partie enceinte présentant une pièce de fermeture (4, 8) qui est disposée dans ou sur la partie enceinte en forme de pot (1, 2, 22), en celui des côtés du porte-bobine (10, 19, 21) qui est éloigné du fond (22) de la partie enceinte en forme de pot (1, 2, 22), caractérisé par le fait qu'il est prévu, sur la pièce de fermeture (4, 8) ou/et sur le porte-bobine (10, 19, 21), des moyens pour assembler par serrage et/ou par conjugaison de formes la pièce de fermeture (4, 8) au porte-bobine (10, 19, 21), ces moyens étant réalisés de manière telle que la pièce de fermeture (4, 8) sollicite le porte-bobine (10, 19, 21), avec une précontrainte, en direction du fond (22) de la partie enceinte en forme de pot (1, 2, 22).

2. Dispositif selon revendication 1, caractérisé par le fait que lesdits moyens sont formés par au moins un relief (13; 29) et/ou par une dépression de la pièce de fermeture (4, 8) ou par une partie liée à la pièce de fermeture (4, 8) et par au moins une dépression (12; 30) et/ou un relief (11, 14; 28, 31) prévu sur le porte-bobine (10, 19, 21) ou sur une partie liée au porte-bobine (10, 19, 21), cette dépression ou/et ce relief coopérant à la manière d'un moyen d'assemblage par enclenchement ou/et par verrouillage.

3. Dispositif selon revendication 1, caractérisé par les caractéristiques suivantes:
   a) la pièce de fermeture (4, 8) présente, sur son côté tourné vers le porte-bobine (10, 19, 21), des saillants en forme de languette (9; 33) qui s'étendent en direction du porte-bobine (10, 19, 21), sensiblement parallèlement à l'axe longitudinal de la partie enceinte (1, 2, 22) en forme de pot;
   b) chacun des saillants (9; 23) présente au moins un relief (13; 29) s'étendant transversalement à l'axe longitudinal des saillants et en direction du porte-bobine (10, 19, 21);
   c) sur le porte-bobine (10, 19, 21) sont prévus des reliefs (11, 14, 28, 31) et/ou des dépressions (12, 30) qui s'étendent transversalement à l'axe longitudinal du porte-bobine (10, 19, 21) et qui coopèrent, à la manière d'une liaison par verrouillage par enclenchement, avec les reliefs (13, 29) des saillants (9, 33) en forme de languette de la pièce de fermeture (4, 8).

4. Dispositif selon revendication 1, caractérisé par les caractéristiques suivantes :
   a) sur son côté tourné vers la pièce de fermeture (4, 8), le porte-bobine (10, 19, 21) présente des saillants du genre languette qui s'étendent en direction de la pièce de fermeture (4, 8) et sensiblement parallèlement à l'axe longitudinal de la partie enceinte en forme de pot (1, 2, 22);
   b) chacun des saillants présente un relief s'étendant sensiblement transversalement à l'axe longitudinal des saillants et en direction d'une partie de la pièce de fermeture (4, 8);
   c) sur la pièce de fermeture (4, 8) sont prévus des reliefs et dépressions qui s'étendent sensiblement transversalement à l'axe longitudinal de la pièce de fermeture (4, 8) et qui, à la manière d'une liaison par verrouillage par enclenchement, coopèrent avec les reliefs sur les saillants du genre languette du porte-bobine (10, 19, 21).

5. Dispositif selon au moins l'une des revendications 3 ou 4 précédentes, caractérisé par le fait que les reliefs et dépressions sont bordés par des parties du genre rail (35) qui s'étendent parallèlement aux reliefs du genre languette (9; 33) et servent de guide pour ceux-ci.

6. Dispositif selon revendication 5, caractérisé par le fait que les parties du genre rail (35) sont disposées sur le porte-bobine (10, 19, 21), dans la région des reliefs (11, 14; 28, 31) et des dépressions (12; 30).

7. Dispositif selon au moins l'une des revendications 3 ou 4 précédentes, caractérisé par le fait que chacun des saillants du genre languette (9; 33) présente un ajour (34) dans lequel s'engage un relief (36) prévu sur le porte-bobine (10, 19, 21).

8. Dispositif selon l'une des revendications 3 ou 4 précédentes, caractérisé par le fait que chacun des saillants du genre languette (9; 33) présente, sur son côté tourné vers la paroi intérieure de la partie enceinte en forme de pot (1, 2, 22), un relief (15; 27) qui s'applique, sous contrainte, contre la paroi intérieure de la partie enceinte en forme de pot (1, 2, 22).

9. Dispositif selon au moins l'une des revendications précédentes, caractérisé par le fait qu'il est prévu un élément élastique (7) qui prend appui contre la pièce de fermeture (4, 8) et sollicite, vers le fond (22) de la partie enceinte en forme de pot (1, 2, 22), un aimant permanent (16) agencé dans le porte-bobine (10, 19, 21) ainsi qu'une tige polaire (17, 23) assemblée à cet aimant.

10. Dispositif selon revendication 9, caractérisé par le fait que l'élément élastique est constitué par un ressort.

11. Dispositif selon au moins l'une des revendications précédentes, caractérisé par le fait que les moyens pour l'assemblage avec liaison par serrage de la pièce de fermeture (4, 8) et du porte-bobine (10, 19, 21) sont constitués par un évidement prévu sur l'un des composants, porte-bobine (10, 19, 21) ou pièce de fermeture (4, 8) et par un relief prévu sur l'autre composant, pièce de fermeture (4, 8) ou porte-bobine (10, 19, 21), cet évidement et ce relief coopérant à la manière d'un assemblage par emboîtement avec liaison par frottement.

12. Dispositif selon au moins l'une des revendications précédentes, caractérisé par le fait que les moyens pour l'assemblage par serrage de la partie fermeture (4, 8) et du porte-bobine (10, 19, 21) sont formés par un corps tubulaire agencé sur l'un de ces deux composants et par un relief situé sur l'autre de ces deux composants, ce corps et ce relief coopérant à la manière d'un assemblage par emboîtement avec liaison par frottement.

13. Dispositif selon au moins l'une des revendications précédentes, caractérisé par le fait que les moyens d'assemblage par serrage de la pièce de fermeture (4, 8) et du porte-bobine (10, 19, 21) sont constitués par des éléments de blocage disposés sur l'un des composants, pièce de fermeture (4, 8) ou porte-bobine (10, 19, 21), et attaquant l'autre composant, à savoir le porte-bobine (10, 19, 21) ou la pièce de fermeture (4, 8).

14. Dispositif selon au moins l'une des revendications précédentes, caractérisé par le fait que la pièce de fermeture (4, 8) est réalisée en tant que traversée pour un câble (5, 6) reliant un composant électrique (20) disposé dans l'enceinte (1, 2, 22) à un composant électrique situé à l'extérieur de l'enceinte (1, 2, 22).